# EUROPÄISCHE PATENTSCHRIFT

(11) **EP 2 551 487 B1**
(45) Veröffentlichungstag und Bekanntmachung des Hinweises auf die Patenterteilung: **21.03.2018**
(21) Anmeldenummer: 12178028.2
(22) Anmeldetag: 26.07.2012
(51) Int. Cl.: F02C 3/34

(54) **Verfahren zum Betrieb eines Gasturbinenkraftwerks mit Abgasrezirkulation**
Method for operating a gas turbine power plant with flue gas recirculation
Procédé de fonctionnement d'une centrale à turbine à gaz avec recirculation des gaz d'échappement

(30) Priorität: 27.07.2011 EP 11175516
(43) Veröffentlichungstag der Anmeldung: 30.01.2013
(73) Patentinhaber: Ansaldo Energia IP UK Limited, London W1G 9DQ (GB)
(72) Erfinder: Sander, Frank, 33605 Bielefeld (DE); Güthe, Felix, 4056 Basel (CH); Graf, Frank, 5415 Nussbaumen (CH)
(74) Vertreter: Bernotti, Andrea

(56) Entgegenhaltungen:
- WO-A2-2010/072710
- DE-A1-102008 002 870
- DE-A1-102008 037 383
- DE-A1-102009 044 588
- GB-A- 2 473 098

## Beschreibung

### TECHNISCHES GEBIET

Die vorliegende Erfindung betrifft ein Verfahren zum Betrieb einer Gasturbine mit Abgasrezirkulation sowie ein Gasturbinenkraftwerk zur Durchführung des Verfahrens.

### STAND DER TECHNIK

Die Rezirkulation von Abgasen ist eine Technologie, welche grundsätzlich für unterschiedlichste Zwecke bei Gasturbinen eingesetzt werden kann. So wird Abgasrezirkulation beispielsweise für die Reduktion der NOx-Emission oder zu einer Reduktion des abzuleitenden Abgasstroms vorgeschlagen. Bei der Rezirkulation von Abgasen bei einer Gasturbine wird ein wesentlicher Anteil des Abgases aus dem gesamten Abgasstrom abgezweigt und typischerweise nach Kühlung und Reinigung dem Eingangsmassenstrom der Gasturbine respektive dem Verdichter zugeführt, wobei der rückgeführte Abgasstrom mit frischer Umgebungsluft vermischt wird, und diese Mischung anschliessend dem Verdichter zugeführt wird.

Vorteilhaft kann durch Abgasrezirkulation der Kohlendioxid- Partialdruck in den Abgasen erhöht werden, um die Leistungsverluste und Wirkungsgradverluste von Kraftwerken mit Kohlendioxid-Abscheidung zu reduzieren. Weiter ist Abgasrezirkulation mit dem Ziel vorgeschlagen worden, die Sauerstoffkonzentration in den Ansauggasen von Gasturbinen zu reduzieren, um dadurch die NOx-Emissionen zu reduzieren.

Zur Abgasrezirkulation beschreibt beispielsweise die US 7536252 B1 ein Verfahren zum Steuern eines Abgasrezirkulationsstroms einer Turbomaschine, der über ein Abgasrezirkulationssystem zu dem Eintritt der Turbomaschine zurückgeführt wird. In diesem Verfahren wird ein Soll-Abgasrezirkulationsanteil bestimmt, wobei der Abgasrezirkulationsanteil als Anteil des Abgasstroms an dem Eintrittsstrom der Turbomaschine definiert ist, und der Ist-Wert auf den Soll-Wert geregelt wird.

Aus der US2009/0145126 ist eine Methode zum Betreiben einer Gasturbine mit Abgasrezirkulation bekannt, bei dem die Abgaszusammensetzung bestimmt wird, und mit einem Kontrollorgan eine Regelung der Abgasrezirkulation in Abhängigkeit von der gemessenen Abgaszusammensetzung durchgeführt wird.

Aus den Dokumenten DE 10 2009 044 588 A1, DE 10 2008 002 870 A1 und DE 10 2008 037 383 A1 sind weitere Verfahren zum Betreiben einer Gasturbinenanlage mit Abgasrezirkulation bekannt. Auch wenn in dem Stand der Technik ein Abscheiden von Kondensaten nach der Rückkühlung beschrieben ist, kann die Vermischung von rückgekühltem rezirkuliertem Abgas mit frischer Umgebungsluft zu einer erneuten Kondensation und zu einer Tropfenbildung kommen. Je nach Umgebungsbedingungen, d.h. Temperatur und relativer Luftfeuchtigkeit der angesaugten Umgebungsluft, und Betriebszustand der Gasturbine kann es bei dieser Vermischung zu einer erheblichen Tropfenbildung kommen. Diese Tropfen können mit dem Ansaugstrom in den Verdichter gelangen und zu Erosionsschäden führen.

### DARSTELLUNG DER ERFINDUNG

Der vorliegenden Erfindung ist die Aufgabe gestellt, ein Verfahren zum zuverlässigen Betrieb eines Gasturbinenkraftwerkes mit Abgasrezirkulation unabhängig von der Temperatur und der relativen Luftfeuchtigkeit der Umgebungsluft anzugeben.

Erfindungsgemäss wird diese Aufgabe durch den Gegenstand des unabhängigen Anspruchs 1 gelöst. Der Kern der Erfindung ist ein Verfahren zum Betrieb einer Gasturbine mit Abgasrezirkulation, bei welchem die rezirkulierten Abgase nach einer Rückkühlung und vor Vermischen mit der Umgebungsluft zum Ansaugstrom wiedererwärmt werden. Der Gasturbinenprozess selber umfasst ein Verfahren, bei dem ein Verdichter eingangsseitig Ansaugluft ansaugt und zu ausgangsseitig zur Verfügung stehender Verdichterendluft verdichtet, eine Brennkammer, in welcher unter Verwendung der Verdichterendluft ein Brennstoff unter Bildung von Heissgas verbrannt wird, sowie eine

Turbine, in welcher das Heissgas unter Arbeitsleistung entspannt.

Das erfindungsgemässe Verfahren wird für den Betrieb eines Gasturbinenkraftwerkes mit Abgasrezirkulation, welches eine Gasturbine, einen Abhitzedampferzeuger und einen Abgasteiler, der die Abgase des Gasturbinenkraftwerkes in einen ersten Abgasstrom zur Rezirkulation in den Ansaugstrom der Gasturbine und in einen zweiten Abgasstrom zur Abgabe an die Umgebung teilt, ein Regelelement zur Regelung des ersten Abgasstroms sowie ein Rückkühler zur Kühlung des ersten Abgasstroms vor dessen Vermischung mit Umgebungsluft zum Ansaugstrom umfasst, vorgeschlagen. Es zeichnet sich dadurch aus, dass der erste Abgasstrom nach der Rückkühlung im Rückkühler und vor der Vermischung mit der Umgebungsluft wiedererwärmt wird. Durch dieses Wiedererwärmen wird eine Kondensation von in den rückgekühlten Abgasen enthaltenem dampfförmigem Wasser bei einer Abkühlung infolge der Vermischung mit der Umgebungsluft vermieden. Der zweite Abgasstrom kann direkt an die Umgebung angegeben werden oder wird nach einer Nachbehandlung abgegeben. Beispielsweise kann aus dem zweiten Abgasstrom CO2 abgeschieden werden, bevor der Reststrom an die Umgebung abgegeben wird.

Die Temperaturerhöhung beim Wiedererwärmen der rezirkulierten Abgase ist dabei so zu wählen, dass die relative Luftfeuchtigkeit des Ansaugstroms, der bei der Vermischung von rezirkulierten Abgasen und Umgebungsluft entsteht, unter 100% bleibt. Da eine homogene Vermischung rezirkulierten Abgasen und Umgebungsluft praktisch schwer zu realisieren ist, ist die Temperaturerhöhung bevorzugt grösser zu wählen, so dass bei der Vermischung von rezirkulierten Abgasen und Umgebungsluft ein Ansaugstrom erhalten wird, der gemittelt eine relative Luftfeuchtigkeit von weniger als 95% aufweist. Für Anlagen mit schlechter Vermischung ist die Temperaturerhöhung so zu wählen, dass bei der Vermischung von rezirkulierten Abgasen und Umgebungsluft ein Ansaugstrom erhalten wird, der gemittelt eine relative Luftfeuchtigkeit von weniger als 90% oder sogar weniger als 80% relative Luftfeuchte aufweist.

Zum Wiedererwärmen kann beispielsweise Abwärme des Wasserdampfkreislaufs oder eines Kühler, z.B. eines Generatorkühlers, eines Kühlluftkühlers oder eines Ölkühlers verwendet werden.

Nach einer Ausführung des Verfahrens wird die Temperaturerhöhung durch Wiedererwärmen abhängig von der Temperatur der angesaugten Umgebungsluft geregelt. Je tiefer die Temperatur der angesaugten Umgebungsluft ist, desto stärker wird das rezirkulierte Abgas bei der Vermischung gekühlt und desto eher kann Feuchtigkeit kondensieren. Um dies zu vermeiden, wird das rezirkulierte Abgas um so stärker wiedererwärmt, je kälter die angesaugte Umgebungsluft ist.

Weiter ist die Kondensationsgefahr bei Vermischung von der relativen Luftfeuchtigkeit der angesaugten Umgebungsluft abhängig. Je höher die relative Luftfeuchtigkeit der angesaugten Umgebungsluft, desto leichter kann Feuchtigkeit bei der Vermischung kondensieren. Nach einer Ausführung des Verfahren wird daher die Temperaturerhöhung durch Wiedererwärmen abhängig von der relativen Luftfeuchtigkeit der angesaugten Umgebungsluft geregelt.

In einer weiteren Ausführung des Verfahrens wird die Wiedererwärmung abhängig von der Temperatur und der relativen Luftfeuchtigkeit der angesaugten Umgebungsluft geregelt.

Die Vermischung und insbesondere eine mögliche Übersättigung infolge der Vermischung ist stark von der Abgasrezirkulationsrate, d.h. dem Verhältnis vom rezirkulierten Abgasstrom zum Gesamtabgasstrom oder zum gesamten Verdichteransaugstrom abhängig. In einer weiteren Ausführung wird daher das Wiedererwärmen abhängig von der Abgasrezirkulationsrate geregelt. In einer Ausführung wird das Wiedererwärmen abhängig von der Abgasrezirkulationsrate und der Temperatur der Umgebungsluft und/ oder der relativen Luftfeuchtigkeit der Umgebungsluft geregelt.

Typischerweise ist der erste Abgasteilstrom nach Rückkühlung mit Feuchtigkeit gesättigt. Der absolute Feuchtigkeitsgehalt und damit auch die Gefahr einer Kondensation ist daher auch von der Temperatur des ersten Abgasteilstroms nach Rückkühlung abhängig. Nach einer Ausführung des Verfahrens wird die Temperaturerhöhung durch Wiedererwärmen abhängig von der Temperatur des ersten Abgasteilstroms nach Rückkühlung geregelt wird.

Je nach Betriebsbedingungen und Rückkühlung kann die relative Feuchtigkeit in den rezirkulierten Abgasen jedoch unter 100% betragen. Um unter diesen Bedingungen das Wiedererwärmen auf ein Minimum beschränken zu können, wird nach einer weiteren Ausführung des Verfahrens die Temperaturerhöhung durch Wiedererwärmen abhängig von der relativen Luftfeuchtigkeit des ersten Abgasteilstroms nach Rückkühlung geregelt.

Alternativ oder in Kombination mit den Temperaturen und relativen Feuchtigkeiten der angesaugten Umgebungsluft und der rezirkulierten Abgase kann die Temperaturerhöhung durch Wiedererwärmen auch abhängig von der Temperatur des Verdichteransaugstroms nach Vermischung von rückgekühltem rezirkuliertem Abgas mit frischer Umgebungsluft geregelt werden.

Weiter wird in einer Ausführung des Verfahren die Temperaturerhöhung durch Wiedererwärmen abhängig von der relativen Luftfeuchtigkeit des Verdichteransaugstroms geregelt.

In einer Ausführung wird die Temperaturerhöhung durch Wiedererwärmen so geregelt, dass die relative Luftfeuchtigkeit des Verdichteransaugstroms kleiner als 100% ist.

In einer weiteren Ausführung, die höhere Sicherheit gegen Kondensation insbesondere bei inhomogener Vermischung bietet, wird die Temperaturerhöhung durch Wiedererwärmen so geregelt wird, dass die relative Luftfeuchtigkeit des Verdichteransaugstroms kleiner als 95% ist.

Aufgrund der Kondensationsgefahr an einem Sensor zur Messung der relativen Feuchte ist es in der Praxis schwierig eine relative Luftfeuchtigkeit von nahe 100% in einem quasi gesättigten Strom zu messen. Daher wird in einer Ausführung des Verfahrens die Luftfeuchtigkeit in dem Ansaugstrom nach Vermischung von rückgekühlten rezirkulierten Abgas mit frischer Umgebungsluft aus anderen Messungen und/ oder Betriebsparametern berechnet. Dies sind beispielsweise die Temperaturen und Massenströme von rückgekühltem rezirkuliertem Abgas und von frischer Umgebungsluft.
Weiter kann der Verdichtereintrittszustand auch aufgrund von Prozessgrössen, die im Verdichter gemessen werden, berechnet werden. Dazu kann beispielsweise die relative Feuchte, die Temperatur und der Druck am Verdichteraustritt oder in einem aus dem Verdichter abgezweigten Kühlluftstrom gemessen werden und damit die Eintrittsbedingungen angenährt werden.
Typischerweise ändert sich die absolute Feuchte bei der Verdichtung nicht. Die relative und absolute Feuchte kann im Verdichter oder in einer Abzweigung des Verdichters problemlos gemessen werden, da die relative Luftfeuchtigkeit bei der Verdichtung aufgrund der Erwärmung und Verdichtung schnell fällt. Die messtechnischen Probleme, die bei gesättigten Gasen auftreten, treten damit nicht auf.
Wird in dem Verdichter Wasser, beispielsweise z.B. zur Leistungssteigerung zugeführt, so muss der auf den Ansaugmassenstrom bezogene zugeführte Wasserstrom bei der Berechnung der absoluten Eintrittsfeuchte abgezogen werden.

Mit einer Messung der Verdichtereintrittstemperatur und der absoluten Feuchte kann die relative Feuchte berechnet werden. Die Verdichtereintrittstemperatur selber kann über das Druckverhältnis und bekannten Verdichterkennfeldern ausgehend von den Zustandsgrössen im Verdichter angenährt werden. Dies kann vorteilhaft sein, wenn die Zuverlässigkeit einer Eintrittstemperaturmessung durch Kondensation an der Temperaturmessung beeinträchtigt ist. Ausserdem wird die Luft bis zum Verdichterende durchmischt, so dass eine Mischungstemperatur mit nur einer oder wenigen Messstellen zuverlässig gemessen werden kann. Da eine homogene Vermischung von ambienter Luft und typischerweise wärmeren rezirkulierten Abgasen am Verdichtereintritt praktisch nicht möglich ist, ist eine Messung der Mischungstemperatur am Verdichtereintritt nur mit vielen Messstellen und entsprechen grossem Aufwand möglich.
Beim Verdichtereintritt wird die Ansaugluft stark beschleunigt, so dass es in der ersten Stufe zu Kondensation kommen kann. Diese Beschleunigung ist bei modernen Gasturbinen, die mindestens eine verstellbare Verdichterleitschaufel aufweisen, von der Umlenkung in der mindestens einen verstellbaren Verdichterleitschaufel abhängig. Gemäss einer Ausführung des Verfahrens wird daher die Temperaturerhöhung durch Wiedererwärmen abhängig von der Stellung einer verstellbaren Verdichterleitreihe geregelt.

Das Verfahren ist beispielsweise auf Gasturbinen, die einen oder mehrere Verdichter, eine Brennkammer und eine Turbine umfassen anwendbar, wobei der Verdichter Ansauggase verdichtet, Brennstoff in der Brennkammer mit den verdichteten Gasen zu einem Heissgas verbrannt wird, dieses Heissgas in der Turbine unter Arbeitsabgabe entspannt wird und die Turbine den Verdichter antreibt und nutzbare Leistung abgibt.

Weiter ist es auf Gasturbinen mit sequentieller Verbrennung, d.h. Gasturbinen die einen oder mehrere Verdichter, eine erste Brennkammer, eine Hochdruckturbine, eine zweite Brennkammer (sequentielle Brennkammer) und eine Niederdruckturbine umfassen, anwendbar.

Neben dem Verfahren ist ein Gasturbinenkraftwerk nach Anspruch 13 zur Durchführung des Verfahrens mit Abgasrezirkulation Gegenstand der Erfindung. Ein derartiges Kraftwerk umfasst eine Gasturbine mit Verdichter, Brennkammer, Turbine, einem Regler, einen Abhitzedampferzeuger und einen Abgasteiler, der die Abgase in einen ersten Abgasstrom zur Rezirkulation in einen Ansaugstrom der Gasturbine und in einen zweiten Abgasstrom zur Abgabe an die Umgebung teilt, sowie ein Regelelement zur Regelung der Aufteilung der Abgasmassenströme. Erfindungsgemäss zeichnet sich ein derartiges Kraftwerk dadurch aus, dass es neben einem Wärmetauscher zur Rückkühlung der rezirkulierten Abgase in einer Rezirkulationsleitung zwischen dem Rückkühler und der Zumischung des ersten Abgasstroms in den Ansaugstrom einen Wärmetauscher zum Wiedererwärmen der rezirkulierten Abgase nach Rückkühlung umfasst.
Als Ruckkühler kann beispielsweise ein mit Kühlwasser arbeitender Wärmetauscher, ein Rieselkühler, oder Sprühkühler verwendet werden. Die Verwendung von Rieselkühlern oder Sprühkühlern hat den Vorteil, dass die erforderliche Temperaturdifferenz sehr klein ist, und das rezirkulierte Gas gleichzeitig gewaschen wird und somit potentiell schädliche Verunreinigungen vor der Wiedereinleitung des rezirkulierten Gases in die Gasturbine aus entfernt werden.
Gemäss einer Ausführung der Erfindung umfasst das Gasturbinenkraftwerk mindestens ein Messinstrument zur Messung einer Temperatur und/ oder einer relativen Luftfeuchtigkeit zwischen dem Rückkühler und der Zumischung des ersten Abgasstroms in den Ansaugstrom. Dies kann vor oder nach dem Wärmetauscher zum Wiedererwärmen des ersten Abgasstroms angeordnet sein.
Gemäss einer weiteren Ausführung umfasst das erfindungsgemässe Gasturbinenkraftwerk Messinstrumente zur Messung einer Temperatur und/ oder einer relativen Luftfeuchtigkeit zwischen der Zumischung des ersten Abgasstroms in den Ansaugstrom und dem Verdichtereintritt.

Weiter kann das Gasturbinenkraftwerk Messinstrumente zur Messung einer Temperatur und/ oder einer relativen Luftfeuchtigkeit der aus der Umgebung angesaugten Umgebungsluft umfassen.

Um Abwärme zum Wiedererwärmen des ersten Abgasstroms nutzen zu können ist Wärmetauscher zum Wiedererwärmen des ersten Abgasstroms über Leitungen mit dem Wasserdampfkreislauf, einem Kühlreislauf eines Generators, eines Kühlluftkühlers der Gasturbinenanlage oder eines Ölkühlers verbunden.

Alle erläuterten Vorteile sind nicht nur in den jeweils angegebenen Kombinationen, sondern auch in anderen Kombinationen oder Alleinstellung verwendbar, ohne den Rahmen der Erfindung zu verlassen. Beispielsweise kann anstelle der Messung der relativen Feuchte nach dem Wiedererwärmen die relative Feuchte und Temperatur vor dem Rückkühler, der Massenstrom der rezirkulierten Abgase, die in dem Rückkühler abgeschiedene Kondensatmenge sowie die Temperatur nach Wiedererwärmen gemessen werden und damit die relative Feuchte berechnet werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung eines Gasturbinenkraftwerks mit Rückführung der Abgase;
- Fig. 2: eine schematische Darstellung eines Gasturbinenkraftwerks mit einer Gasturbine mit sequentieller Verbrennung und Rückführung der Abgase; und
- Fig. 3: eine schematische Darstellung eines Gasturbinenkraftwerks mit einer Gasturbine mit sequentieller Verbrennung und Rückführung der Abgase und einem Kohlendioxid- Abscheidsystem.

### WEGE ZUR AUSFÜHRUNG DER ERFINDUNG

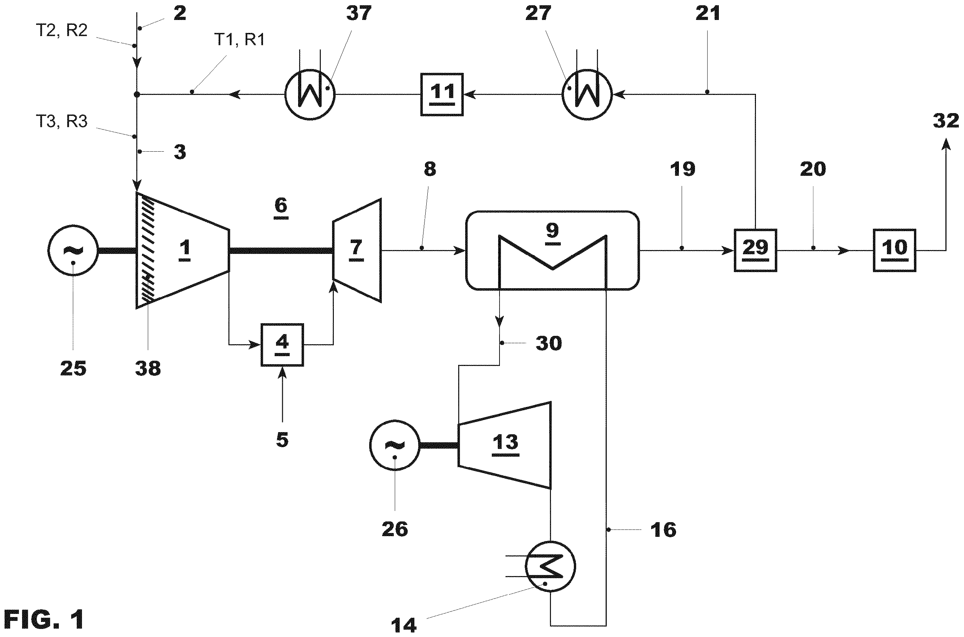

Fig. 1 zeigt in schematischer Darstellung die wesentlichen Elemente eines erfindungsgemässen Gasturbinenkraftwerks. Die Gasturbine 6 umfasst einen Verdichter 1 (Kompressor), die darin verdichtete Verbrennungsluft wird einer Brennkammer 4 zugeführt und dort mit Brennstoff 5 verbrannt. Anschliessend werden die heissen Verbrennungsgase in einer Turbine 7 entspannt. Die in der Turbine 7 erzeugte Nutzenergie wird dann zum Beispiel mit einem auf der gleichen Welle angeordneten ersten Generator 25 in elektrische Energie umgewandelt. Der Verdichteransaugstrom 3 des Verdichters 1 wird über die verstellbaren Leitschaufeln 38 geregelt.

Die aus der Turbine 7 austretenden heissen Abgase 8 werden zur optimalen Nutzung der darin noch enthaltenen Energie in einem Abhitzedampferzeuger 9 (Heat recovery steam generator, HRSG) dazu verwendet, Frischdampf 30 für eine Dampfturbine 13 oder für andere Anlagen zu erzeugen. Die in der Dampfturbine 13 erzeugte Nutzenergie wird zum Beispiel mit einem auf der gleichen Welle angeordneten zweiten Generator 26 in elektrische Energie umgewandelt. Der Wasserdampfkreislauf 39 ist in dem Beispiel vereinfacht und nur schematisch mit einem Kondensator 14 und Speisewasserleitung 16 dargestellt. Verschiedene Druckstufen, Speisewasserpumpen usw. werden nicht gezeigt, da diese nicht Gegenstand der Erfindung sind.

Die Abgase vom Abhitzedampferzeuger 19 werden stromab des Abhitzedampferzeugers 9 in einem Strömungsteiler 29 in einen ersten Abgasteilstrom 21 und einen zweiten Abgasteilstrom 20 geteilt. Der erste Abgasteilstrom 21 wird in die Ansaugleitung der Gasturbine 6 zurückgeführt und dort mit Umgebungsluft 2 vermischt. Der nicht zurückgeführte zweite Abgasteilstrom 20 wird über einen Kamin 32 an die Umgebung abgegeben. Um die Druckverluste der Abgasleitung zu überwinden und als weitere Regelmöglichkeit der Aufteilung der Abgasströme, kann optional ein Abgasgebläse 11 oder regelbares Abgasgebläse 11 vorgesehen sein.

In dem gezeigten Beispiel ist der Strömungsteiler 29 als Regelelement ausgeführt, das es erlaubt, den Rezirkulationsstrom zu regeln.

Im Betrieb mit Rezirkulation wird der zurückgeführte Abgasstrom 21 in einem Abgasrückkühler 27, welcher mit Kondensator ausgestattet sein kann, auf typischerweise etwas über Umgebungstemperatur abgekühlt. Stromab dieses Abgasrückkühlers 27 kann ein Booster oder Abgasgebläse 11 für den Rezirkulationsstrom 21 angeordnet sein. Dieser zurückgeführte Abgasstrom 21 wird in dem Wärmetauscher 37 wieder erwärmt, um seine relative Feuchte zu reduzieren, bevor er mit der Umgebungsluft 2 vermischt und der Gasturbine 6 als Verdichteransaugstrom 3 zugeführt wird.

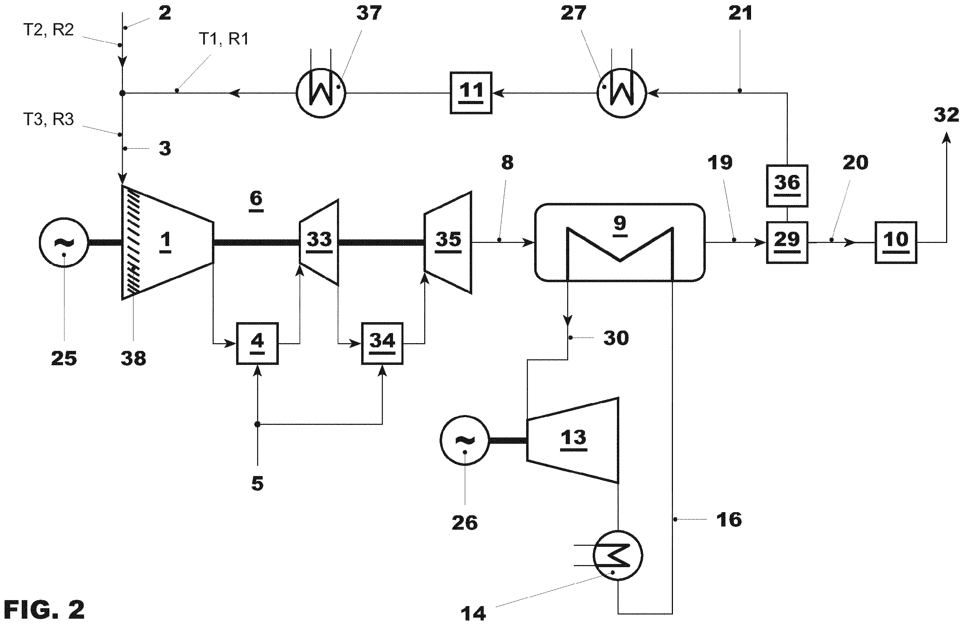

Das Beispiel in Fig. 1 zeigt eine Gasturbine 6 mit einfacher Brennkammer 4. Die Erfindung ist ohne Einschränkung auch für Gasturbinen mit sequentieller Verbrennung, wie sie beispielsweise aus der EP0718470 bekannt sind, anwendbar. In Fig. 2 ist schematisch ein Beispiel für ein Gasturbinenkraftwerk mit sequentieller Verbrennung und Abgasrezirkulation gezeigt. Bei dieser Gasturbine folgt der Brennkammer 4 eine Hochdruckturbine 33. Den unter Arbeitsabgabe teilentspannten Austrittsgasen der Hochdruckturbine 33 wird in der zweiten Brennkammer 34 nochmals Brennstoff 5 zugeführt und verbrannt. Die heissen Verbrennungsgase der zweiten Brennkammer 34 werden in der Niederdruckturbine 35 unter Arbeitsabgabe weiter entspannt. Die Nutzung der Abwärme sowie die Rezirkulation und das Wiedererwärmen erfolgen analog dem Ausführungsbeispiel aus Fig. 1. Es ist lediglich ein zusätzliches Regelelement 36 zur Regelung des Rezirkulationsstroms in der Rezirkulationsleitung vorgesehen. Bei dieser Anordnung kann der Strömungsteiler 29 ohne Regelfunktion ausgeführt sein.

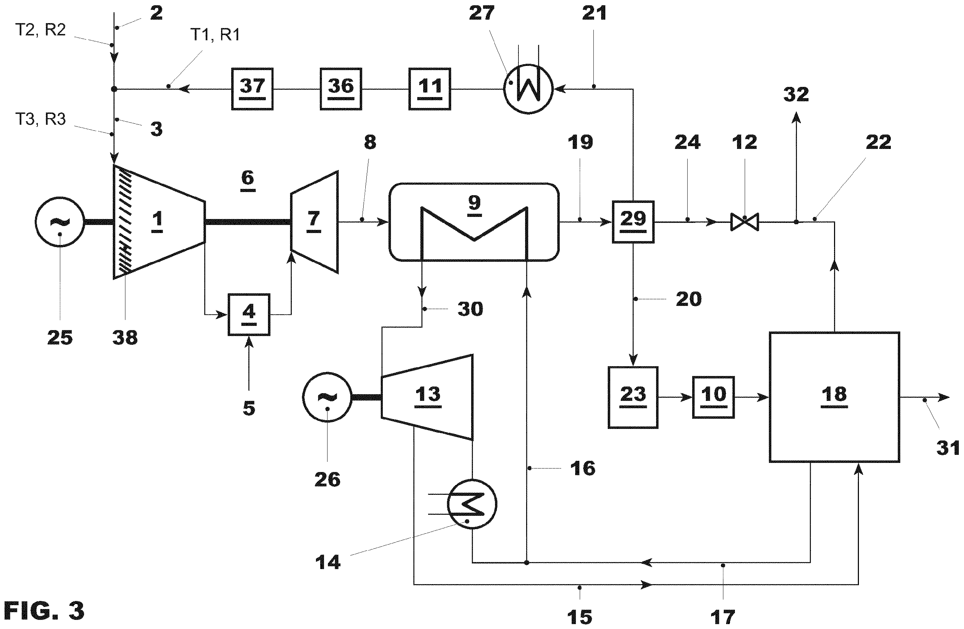

In der Fig. 3 ist basierend auf der Fig. 1 zusätzlich noch ein Kohlendioxid Abscheidsystem 18 dargestellt. Der nicht zurückgeführte zweite Abgasteilstrom 20 wird typischerweise in einem Abgasrückkühler 23 weiter gekühlt und dem Kohlendioxid Abscheidsystem 18 zugeführt. Von diesem werden kohlendioxidarme Abgase 22 über einen Kamin 32 an die Umgebung abgegeben. Um die Druckverluste des Kohlendioxid- Abscheidsystems 18 und der Abgasleitung zu überwinden, kann ein Abgasgebläse 10 vorgesehen sein. Das in dem Kohlendioxid- Abscheidsystem 18 abgeschiedene Kohlendioxid 31 wird typischerweise in einem Verdichter (nicht gezeigt) komprimiert und zur Lagerung oder weiteren Behandlung abgeleitet. Das Kohlendioxid- Abscheidsystem 18 ist über eine Dampfextraktion 15 mit Dampf, typischerweise Mittel- oder Niederdruckdampf, der aus der Dampfturbine 13 abgezweigt wird, versorgt. Der Dampf wird dem Wasserdampfkreislauf nach Energieabgabe im Kohlendioxid- Abscheidsystem 18 in Form von flüssigem Wasser oder als Dampf, bzw. Wasser Dampf- Gemisch wieder zugeführt. In dem gezeigten Beispiel wird der Dampf kondensiert und über die Kondensat- Rückführleitung 17 dem Speisewasser zugeführt.

Der zweite Abgasteilstrom kann auch direkt über einen Abgasbypass 24, der eine Bypassklappe oder Ventil 12 umfasst, zu dem Kamin 32 geführt werden.

### BEZUGSZEICHENLISTE

- 1: Verdichter
- 2: Umgebungsluft
- 3: Verdichteransaugstrom
- 4: Brennkammer, erste Brennkammer
- 5: Brennstoff
- 6: Gasturbine
- 7: Turbine
- 8: Heisse Abgase der Gasturbine
- 9: Abhitzedampferzeuger (heat recovery steam generator, HRSG)
- 10: Abgasgebläse für den zweiten partiellen Abgasstrom (zum Kohlendioxid-Abscheide- System oder Kamin)
- 11: Abgasgebläse für den ersten Abgasteilstrom (Abgasrezirkulation)
- 12: Bypassklappe oder Ventil
- 13: Dampfturbine
- 14: Kondensator
- 15: Dampfextraktion für das Kohlendioxid- Abscheidsystem
- 16: Speisewasserleitung
- 17: Kondensat- Rückführleitung
- 18: Kohlendioxid- Abscheidsystem
- 19: Abgas vom Abhitzedampferzeuger
- 20: Zweiter Abgasteilstrom
- 21: Erster Abgasteilstrom (Abgasrezirkulation)
- 22: Kohlendioxidarmes Abgas
- 23: Abgasrückkühler (für den zweiten Abgasteilstrom)
- 24: Abgasbypass zum Kamin
- 25: Erster Generator
- 26: Zweiter Generator
- 27: Abgasrückkühler (für den ersten Abgasteilstrom)
- 29: Abgasteiler
- 30: Frischdampf
- 31: Abgeschiedenes Kohlendioxid
- 32: Kamin
- 33: Hochdruckturbine
- 34: zweite Brennkammer
- 35: Niederdruckturbine
- 36: Regelelement
- 37: Wärmetauscher
- 38: Verstellbare Verdichterleitreihe

- T1: Temperatur nach Wiedererwärmung
- T2: Temperatur der angesaugten Umgebungsluft
- T3: Temperatur des Verdichteransaugstroms
- R1: Relative Luftfeuchtigkeit nach Wiedererwärmung
- R2: Relative Luftfeuchtigkeit der angesaugten Umgebungsluft
- R3: Relative Luftfeuchtigkeit des Verdichteransaugstroms

## Patentansprüche

1. Verfahren zum Betrieb eines Gasturbinenkraftwerkes mit Abgasrezirkulation, welches eine Gasturbine (6), einen Abhitzedampferzeuger (9) und einen Abgasteiler (29), der die Abgase (19) des Gasturbinenkraftwerkes in einen ersten Abgasstrom (21) zur Rezirkulation in einen Ansaugstrom (3) der Gasturbine (6) und in einen zweiten Abgasstrom (20, 24) zur Abgabe an die Umgebung teilt, ein Regelelement (11, 29, 36) zur Regelung des ersten Abgasstroms (21) sowie ein Rückkühler (27) zur Kühlung des ersten Abgasstroms (21) vor dessen Vermischung mit Umgebungsluft (2) zum Ansaugstrom (3) umfasst,
**dadurch gekennzeichnet, dass** der erste Abgasstrom (21) nach der Rückkühlung im Rückkühler (27) und vor der Vermischung mit der Umgebungsluft (2) wiedererwärmt wird, um eine Kondensation von in den rückgekühlten Abgasen enthaltenem dampfförmigem Wasser bei einer Abkühlung infolge der Vermischung mit der Umgebungsluft (2) zu vermeiden.

2. Verfahren nach Anspruch 1, **dadurch gekennzeichnet, dass** die Temperaturerhöhung durch Wiedererwärmen abhängig von der Temperatur (T2) der angesaugten Umgebungsluft (2) geregelt wird.

3. Verfahren nach Anspruch 1 oder 2, **dadurch gekennzeichnet, dass** die Temperaturerhöhung durch Wiedererwärmen abhängig von der relativen Luftfeuchtigkeit (R2) der angesaugten Umgebungsluft geregelt wird.

4. Verfahren nach einem der vorrangehenden Ansprüche, **dadurch gekennzeichnet, dass** die Temperaturerhöhung durch Wiedererwärmen abhängig von dem Verhältnis von rezirkuliertem Abgasmassenstrom zu Gesamtabgasmassenstrom geregelt wird.

5. Verfahren nach einem der vorrangehenden Ansprüche, **dadurch gekennzeichnet, dass** die Temperaturerhöhung durch Wiedererwärmen abhängig von der Temperatur des ersten Abgasteilstroms (21) nach Rückkühlung geregelt wird.

6. Verfahren nach einem der vorrangehenden Ansprüche, **dadurch gekennzeichnet, dass** die Temperaturerhöhung durch Wiedererwärmen abhängig von der relativen Luftfeuchtigkeit des ersten Abgasteilstroms (21) nach Rückkühlung geregelt wird.

7. Verfahren nach einem der vorrangehenden Ansprüche, **dadurch gekennzeichnet, dass** die Temperaturerhöhung durch Wiedererwärmen abhängig von der Temperatur (T3) des Verdichteransaugstroms (3) geregelt wird.

8. Verfahren nach einem der vorrangehenden Ansprüche, **dadurch gekennzeichnet, dass** die Temperaturerhöhung durch Wiedererwärmen abhängig von der relativen Luftfeuchtigkeit (R3) des Verdichteransaugstroms (3) geregelt wird.

9. Verfahren nach Anspruch 8, **dadurch gekennzeichnet, dass** die Temperaturerhöhung durch Wiedererwärmen so geregelt wird, dass die relative Luftfeuchtigkeit (R3) des Verdichteransaugstroms (3) kleiner als 100% ist.

10. Verfahren nach Anspruch 8, **dadurch gekennzeichnet, dass** die Temperaturerhöhung durch Wiedererwärmen so geregelt wird, dass die relative Luftfeuchtigkeit (R3) des Verdichteransaugstroms (3) kleiner als 95% ist.

11. Verfahren nach einem der Ansprüche 7 bis 10, **dadurch gekennzeichnet, dass** die Verdichtereintrittstemperatur und/ oder die relative Feuchte bei Verdichtereintritt aus Druck-, Temperatur- und Feuchtemessungen am Verdichteraustritt oder einer Zwischenstufe des Verdichters berechnet werden.

12. Verfahren nach einem der vorrangehenden Ansprüche, **dadurch gekennzeichnet, dass** die Temperaturerhöhung durch Wiedererwärmen abhängig von der Stellung einer verstellbaren Verdichterleitreihe (38) geregelt wird.

13. Gasturbinenkraftwerk mit Abgasrezirkulation, welches eine Gasturbine (6) mit einem Regler, einen Abhitzedampferzeuger (9) und einen Abgasteiler (29), der die Abgase (19) in einen ersten Abgasstrom (21) zur Rezirkulation in einen Ansaugstrom der Gasturbine (6) und in einen zweiten Abgasstrom (20, 24) zur Abgabe an die Umgebung teilt, ein Regelelement (29, 36) zur Regelung des ersten Abgasstroms (21) sowie ein Rückkühler (27) zur Kühlung des ersten Abgasstroms (21) vor dessen Vermischung mit Umgebungsluft (2) zum Ansaugstrom (3) umfasst, **dadurch gekennzeichnet, dass** das Gasturbinenkraftwerk einen Wärmetauscher umfasst, welcher in einer Rezirkulationsleitung zwischen dem Rückkühler (27) und der Zumischung des ersten Abgasstroms (21) in den Ansaugstrom (3) der Gasturbine ein zum Wiedererwärmen des ersten Abgasstroms (21) angeordnet ist.

14. Gasturbinenkraftwerk mit Abgasrezirkulation nach Anspruch 13, **dadurch gekennzeichnet, dass** es Messinstrumente zur Messung einer Temperatur (T1) und/ oder einer relativen Luftfeuchtigkeit (R1) nach dem Wärmetauscher (37) zum Wiedererwärmen des ersten Abgasstroms (21) umfasst.

15. Gasturbinenkraftwerk mit Abgasrezirkulation nach Anspruch 13, **dadurch gekennzeichnet, dass** der Wärmetauscher (37) zum Wiedererwärmen Abwärme des ersten Abgasstroms (21) mit dem Wasserdampfkreislauf, einem Kühlreislauf eines Generators, eines Kühlluftkühlers oder eines Ölkühlers verbunden ist.

## Claims

1. Method for operating a gas turbine power plant with flue gas recirculation, which comprises a gas turbine (6), a waste heat steam generator (9), and an exhaust gas splitter (29) which splits the exhaust gases (19) from the gas turbine power plant into a first exhaust gas stream (21) for recirculation into an intake stream (3) of the gas turbine (6) and into a second exhaust gas stream (20, 24) for discharge to the environment, a control element (11, 29, 36) for regulating the first exhaust gas stream (21), and a recooler (27) for cooling the first exhaust gas stream (21) before it is mixed with ambient air (2) into the intake gas stream (3),
**characterised in that** the first exhaust gas stream (27) is reheated after recooling in the recooler (27) and before mixing with the ambient air (2) in order to avoid condensation of vaporised water contained in the recooled exhaust gases on cooling following mixing with the ambient air (2).

2. Method according to claim 1, **characterised in that** the temperature increase from reheating is regulated depending on the temperature (T2) of the aspirated ambient air (2).

3. Method according to claim 1 or 2, **characterised in that** the temperature increase from reheating is regulated depending on the relative humidity (R2) of the aspirated ambient air.

4. Method according to any of the preceding claims, **characterised in that** the temperature increase from reheating is regulated depending on the ratio of recirculated exhaust gas mass flow to total exhaust gas mass flow.

5. Method according to any of the preceding claims, **characterised in that** the temperature increase from reheating is regulated depending on the temperature of the first partial exhaust gas stream (21) after recooling.

6. Method according to any of the preceding claims, **characterised in that** the temperature increase from reheating is regulated depending on the relative humidity of the first partial exhaust gas stream (21) after recooling.

7. Method according to any of the preceding claims, **characterised in that** the temperature increase from reheating is regulated depending on the temperature (T3) of the compressor intake stream (3).

8. Method according to any of the preceding claims, **characterised in that** the temperature increase from reheating is regulated depending on the relative humidity (R3) of the compressor intake stream (3).

9. Method according to claim 8, **characterised in that** the temperature increase from reheating is regulated such that the relative humidity (R3) of the compressor intake stream (3) is less than 100%.

10. Method according to any claim 8, **characterised in that** the temperature increase from reheating is regulated such that the relative humidity (R3) of the compressor intake stream (3) is less than 95%.

11. Method according to any of claims 7 to 10, **characterised in that** the compressor inlet temperature and/or the relative humidity at compressor inlet are calculated from the pressure, temperature and humidity measurements at the compressor outlet or at an intermediate stage of the compressor.

12. Method according to any of the preceding claims, **characterised in that** the temperature increase from reheating is regulated depending on the position of an adjustable compressor guide vane row (38).

13. Gas turbine power plant with flue gas recirculation, which comprises a gas turbine (6) with a regulator, a waste heat steam generator (9) and an exhaust gas splitter (29) which splits the exhaust gases (19) into a first exhaust gas stream (21) for recirculation into an intake stream of the gas turbine (6) and into a second exhaust gas stream (20, 24) for discharge to the environment, a control element (11, 29, 36) for regulating the first exhaust gas stream (21), and a recooler (27) for cooling the first exhaust gas stream (21) before it is mixed with ambient air (2) into the intake gas stream (3),
**characterised in that** the gas turbine power plant comprises a heat exchanger for reheating the first exhaust gas stream (21) which is arranged in a recirculation line between the recooler (27) and the mixing of the first exhaust gas stream (21) into the intake stream (3) of the gas turbine.

14. Gas turbine power plant with flue gas recirculation according to claim 13,
**characterised in that** it comprises measuring instruments for measuring a temperature (T1) and/or a relative humidity (R1) downstream of the heat exchanger (37) for reheating the first exhaust gas stream (21).

15. Gas turbine power plant with flue gas recirculation according to claim 13,
**characterised in that** the heat exchanger (37) for reheating waste heat from the first exhaust gas stream (21) is connected to the water vapour circuit, a cooling circuit of a generator, a cooling air cooler or an oil cooler.

## Revendications

1. Procédé pour l'exploitation d'une centrale énergétique à turbine à gaz avec remise en circulation des gaz d'échappement, qui comprend une turbine à gaz (6), un générateur de vapeur à récupération de chaleur (9) et un séparateur de gaz d'échappement (29), qui divise les gaz d'échappement (19) de la centrale énergétique à turbine à gaz en un premier flux de gaz d'échappement (21) pour la remise en circulation dans un flux d'aspiration (3) de la turbine à gaz (6) et en un deuxième flux de gaz d'échappement (20, 24) pour l'évacuation vers l'environnement, un élément de régulation (11, 29, 36) pour la régulation du premier flux de gaz d'échappement (21) ainsi qu'un refroidisseur de retour (27) pour le refroidissement du premier flux de gaz d'échappement (21) avant son mélange avec l'air ambiant (2) vers le flux d'aspiration (3),
**caractérisé en ce que** le premier flux de gaz d'échappement (21) est réchauffé, après le refroidissement de retour dans le refroidisseur de retour (27) et avant le mélange avec l'air ambiant (2), afin d'éviter une condensation de l'eau sous forme de vapeur contenue dans les gaz d'échappement refroidis lors d'un refroidissement suite au mélange avec l'air ambiant (2).

2. Procédé selon la revendication 1, **caractérisé en ce que** l'augmentation de température est régulée par un réchauffage en fonction de la température (T2) de l'air ambiant (2) aspiré.

3. Procédé selon la revendication 1 ou 2, **caractérisé en ce que** l'augmentation de température est régulée par un réchauffage en fonction de l'humidité relative (R2) de l'air ambiant aspiré.

4. Procédé selon l'une des revendications précédentes, **caractérisé en ce que** l'augmentation de température est régulée par un réchauffage en fonction du rapport entre le débit massique du gaz d'échappement remis en circulation et le débit massique total des gaz d'échappement.

5. Procédé selon l'une des revendications précédentes, **caractérisé en ce que** l'augmentation de température est régulée par un réchauffage en fonction de la température du premier flux de gaz d'échappement (21) après refroidissement de retour.

6. Procédé selon l'une des revendications précédentes, **caractérisé en ce que** l'augmentation de température est régulée par un réchauffage en fonction de l'humidité relative du premier flux de gaz d'échappement (21) après refroidissement de retour.

7. Procédé selon l'une des revendications précédentes, **caractérisé en ce que** l'augmentation de température est régulée par un réchauffage en fonction de la température (T3) du flux d'aspiration du compresseur (3).

8. Procédé selon l'une des revendications précédentes, **caractérisé en ce que** l'augmentation de température est régulée par un réchauffage en fonction de l'humidité relative (R3) du flux d'aspiration du compresseur (3).

9. Procédé selon la revendication 8, **caractérisé en ce que** l'augmentation de température est régulée par un réchauffage de façon à ce que l'humidité relative (R3) du flux d'aspiration du compresseur (3) soit inférieure à 100 %.

10. Procédé selon la revendication 8, **caractérisé en ce que** l'augmentation de température est régulée par un réchauffage de façon à ce que l'humidité relative (R3) du flux d'aspiration du compresseur (3) soit inférieure à 95 %.

11. Procédé selon l'une des revendications 7 à 10, **caractérisé en ce que** la température d'entrée du compresseur et/ou l'humidité relative à l'entrée du compresseur est calculée à partir de mesures de pression, de température et d'humidité à la sortie du compresseur ou au niveau d'un étage intermédiaire du compresseur.

12. Procédé selon l'une des revendications précédentes, **caractérisé en ce que** l'augmentation de température est régulée par un réchauffage en fonction de la position d'une rangée directrice de compresseurs réglable (38).

13. Centrale énergétique à turbine à gaz avec remise en circulation des gaz d'échappement, qui comprend une turbine à gaz (6), un générateur de vapeur à récupération de chaleur (9) et un séparateur de gaz d'échappement (29), qui divise les gaz d'échappement (19) en un premier flux de gaz d'échappement (21) pour la remise en circulation dans un flux d'aspiration de la turbine à gaz (6) et en un deuxième flux de gaz d'échappement (20, 24) pour l'évacuation vers l'environnement, un élément de régulation (29, 36) pour la régulation du premier flux de gaz d'échappement (21) ainsi qu'un refroidisseur de retour (27) pour le refroidissement du premier flux de gaz d'échappement (21) avant son mélange avec l'air ambiant (2) vers le flux d'aspiration (3),
**caractérisée en ce que** la centrale énergétique à turbine à gaz comprend un échangeur thermique qui est disposé dans une conduite de remise en circulation entre le refroidisseur de retour (27) et l'introduction du premier flux de gaz d'échappement (21) dans le flux d'aspiration (3) de la turbine à gaz pour le réchauffage du premier flux de gaz d'échappement (21).

14. Centrale énergétique à turbine à gaz avec remise en circulation des gaz d'échappement selon la revendication 13, **caractérisée en ce qu'**elle comprend des instruments de mesure pour la mesure d'une température (T1) et/ou d'une humidité relative de l'air (R1) après l'échangeur thermique (37) pour le réchauffage du premier flux de gaz d'échappement (21).

15. Centrale énergétique à turbine à gaz avec remise en circulation des gaz d'échappement selon la revendication 13, **caractérisée en ce que** l'échangeur thermique (37) pour le réchauffage du premier flux de gaz d'échappement (21) est relié avec le circuit de vapeur d'eau, un circuit de refroidissement d'un générateur, d'un refroidisseur à air, ou d'un refroidisseur à huile.
